# EUROPÄISCHE PATENTANMELDUNG

(11) **EP 3 825 583 A1**
(43) Veröffentlichungstag der Anmeldung: **26.05.2021**
(21) Anmeldenummer: 20000421.6
(22) Anmeldetag: 23.11.2020
(51) Int. Cl.: F16H 63/06

(54) **STUFENLOS SCHALTBARER RIEMENANTRIEB ODER ANTRIEBSEINHEIT**

(30) Priorität: 22.11.2019 DE 202019004758 U
(71) Anmelder: SCC Fahrzeugtechnik GmbH, 91166 Georgensmünd (DE)
(72) Erfinder: Gundel, Georg, 91166 Georgensgmünd (DE)
(74) Vertreter: Schuhmann, Albrecht

(57) **Zusammenfassung**

Stufenlos schaltbarer Riemenantrieb oder Antriebseinheit mit einem Primärscheibensatz und einem Sekundärscheibensatz mit jeweils einer ersten und einer zweiten Kegelscheibe, wobei der Primärscheibensatz mit dem Sekundärscheibensatz mittels eines Antriebsriemen form- oder reibschlüssig verbunden ist, der Primärscheibensatz sich um eine erste Achse dreht und der Sekundärscheibensatz sich um eine zweite Achse dreht, wobei die erste und die zweite Achse voneinander entfernt angeordnet sind, wobei der Riemenantrieb eine stufenlose Kraftübertragung zwischen dem Primärscheibensatz und dem Sekundärscheibensatz vorsieht und wenigstens der Sekundärscheibensatz ein System zur stufenlosen Verstellung eines Abstands zwischen der ersten und der zweiten Kegelscheibe des Sekundärscheibensatzes aufweist, wobei der Abstand der äußeren Kegelscheibe zur inneren Kegelscheibe, welche auf einer gemeinsamen Achse laufen mittels eines, die äußere Kegelscheibe oder eines an dieser anliegenden oder angelenktem Element bedienbaren Druck- oder Zugbolzen, welcher mittels einer Stelleinheit bedienbar ist, variierbar ausgeführt ist.

## Beschreibung

Die vorliegende Erfindung betrifft einen stufenlos schalbaren Riemenantrieb oder Antriebseinheit mit einem Primärscheibensatz und einem Sekundärscheibensatz mit jeweils einer ersten und einer zweiten Kegelscheibe, wobei der Primärscheibensatz mit dem Sekundärscheibensatz mittels eines Antriebsriemen verbunden ist.

Aus dem Stand der Technik sind verschiedene Riemenantriebe bekannt, die eine stufenlose, variierende Antriebstechnik zeigen. So offenbart die DE 10 2005 035 035 A1 ein Zugmittelbetrieb mit einer Zugmittelscheibe zugehörigen Spannvorrichtung, bei der die Spannvorrichtung als ein zentriert innerhalb der Zugmittelscheibe angeordnetes Federelement und wenigstens als ein die Kegelscheiben gegeneinander haltendes sowie in Wirkverbindung mit dem Federelement eine Vorspannkraft auf die Zugmittelscheibe ausübendes Verbindungsmittel ausgebildet ist. Ein derartiges System realisiert aber nahezu automatisch eine angepasste Übersetzung, in Abhängigkeit von eingesetzten Federkräften und es mangelt dabei an einer individuell anpassbaren, gewünschten Übersetzung des so ausgeführten Riemenantriebs.

Wünschenswert wäre ein mehr individuell auf Wünsche oder Bedürfnisse einstellbarer Riemenantrieb mit stufenloser aber variabler Übersetzung zwischen dem Primär- und dem Sekundär- Scheibensatz.

Aufgabe der vorliegenden Erfindung ist es daher, einen stufenlos variablen Riemenantrieb bereitzustellen, welcher sowohl kompakt aufgebaut ist und über eine stufenlos einstellbare Übersetzung verfügt.

Erfindungsgemäß ist ein stufenlos schaltbarer Riemenantrieb oder eine Antriebseinheit mit einem Primärscheibensatz und einem Sekundärscheibensatz mit jeweils einer ersten und einer zweiten Kegelscheibe, wobei der Primärscheibensatz mit dem Sekundärscheibensatz mittels eines Antriebsriemen form- oder kraftschlüssig verbunden ist, der Primärscheibensatz sich um eine erste Achse dreht und der Sekundärscheibensatz sich um eine zweite Achse dreht, wobei die erste und die zweite Achse voneinander entfernt angeordnet sind, wobei der Riemenantrieb eine stufenlose Kraftübertragung zwischen dem Primärscheibensatz und dem Sekundärscheibensatz vorsieht und wenigstens der Sekundärscheibensatz ein System zur stufenlosen Verstellung eines Abstands zwischen der ersten und der zweiten Kegelscheibe des Sekundärscheibensatzes aufweist, wobei der Abstand der äußeren Kegelscheibe zur inneren Kegelscheibe, welche auf einer gemeinsamen Achse laufen mittels eines, gegen die äußere Kegelscheibe oder einem an dieser anliegenden oder angelenktem Element drückenden Druckbolzen, welcher mittels einer Stelleinheit (20) bedienbar ist, variierbar ausgeführt ist.
Durch diese, stufenlos einstellbare Distanz der ersten Kegelscheibe zur zweiten Kegelscheibe läuft der kraftschlüssig- oder reibschlüssig ausgebildete Riemen oder Zahnriemen entweder näher an der Drehachse oder entsprechend weiter entfernt von der Drehachse und bestimmt das Übersetzungsverhältnis des Antriebes.

Eine Ausgestaltung sieht vor, dass eine verfahrbare Komponente, wie beispielsweise der Druckbolzen, welche den Abstand der Kegelscheiben zueinander einstellbar gestaltet, Bestandteil eines Steiglagers ist oder mit einem solchen verbindbar ist, wobei das Steiglager zumindest eine erste und eine zweite Steiglagerschale aufweist, die gemeinsam zumindest eine Steigbahn mit der Steigung bilden, und zumindest eine Kugel vorgesehen ist, die zwischen der ersten und der zweiten Steiglagerschale angeordnet ist und eine Relativdrehung der ersten zu der zweiten Steiglagerschale ermöglicht. Diese Ausgestaltung ermöglicht, dass eine Kugellagerung genutzt wird, die wenig verschleißanfällig ist. Aufgrund der Relativbewegung der beiden Steiglagerschalen zueinander ist vorzugsweise eine Fettschmierung vorgesehen. Vorzugsweise sind die Steiglagerschalen eingekammert, so dass Fremdkörper und Dreck nicht die Steigung bzw. die Kugel beschädigen können. Beispielsweise ist das Steiglager vollständig eingehaust. Auch kann das Steiglager im Gehäuse eingebettet und das Gehäuse mit der zugeordneten Kegelscheibe zusammen wiederum eine Einhausung bilden.

Bevorzugt wird ein Steiglager verwendet, bei dem zumindest drei Kugeln oder mehr jeweils entlang einer Steigbahn sich bewegen. Mehr Kugeln sind ebenfalls einsetzbar. Die Verwendung der Kugeln erlaubt zum Beispiel, dass das Steiglager eine Rotationsbewegung ausführen kann, insbesondere auch eine kreisförmige Rotationsbewegung. Weiterhin ist es bevorzugt, nicht nur ein, sondern mehrere Steiglager zu verwenden. Beispielsweise sind die Steiglager entlang einer Stirnseite des Gehäuses auf einem Umfangskreis angeordnet. Bevorzugt sind zumindest drei, besonders bevorzugt mindestens vier Steiglager vorgesehen.

Neben Kugeln kann ein Steiglager auch mittels Walzen, Zylindern oder in sonstiger Weise gebaut sein. Hierbei erfolgt beispielsweise eine translatorische Bewegung, die eine Änderung des Abstands der Kegelscheiben zueinander bewirkt.

Eine Ausgestaltung des Riemenantriebs weist ein System auf, bei dem die erste Steiglagerschale mit einem Gehäuse verbunden ist, welches die erste Steiglagerschale verstellbar, insbesondere axial verstellbar aufnimmt, wobei die zweite Steiglagerschale mit der ersten Kegelscheibe gekoppelt ist. Bevorzugt weist die erste Steiglagerschale eine Mittenöffnung auf, die einen Zugang zu einer in der zweiten Steiglagerschale angeordneten Stellschraube ermöglicht, wobei die Stellschraube die äußere Kegelscheibe kontaktiert.
In einer weiteren bevorzugten Ausführung ist die Stelleinheit fernbedienbar ausgebildet was in einer Variante mittels eines Bowdenzuges, welcher an einer Spannaufnahme abgespannt ausgeführt ist oder in einer weiteren Variation mittels einer Hydraulikansteuerung erfolgt.

Gemäß einer Ausgestaltung wird der Sekundärscheibensatz zur Verwendung in einem Fahrzeug genutzt. Das Fahrzeug kann ein Fahrrad sein, ein Ebike, ein Pedelec oder auch ein Kleinkraftfahrzeug wie ein Mofa, ein Moped, oder ein elektrisch angetriebenes Motorrad oder sonstiges sein. Auch kann der Sekundärscheibensatz bei einem Trike oder einem Quad zum Einsatz kommen. Auch andere Fahrzeuge wie Landfahrzeuge, Luftfahrzeuge oder sonstige können diesen Sekundärscheibensatz nutzen.
Für die Verwendung in einem Fahrzeug, wie einem Fahrrad, einem Elektrofahrrad oder einem anderen Fahrzeug kann neben dem beschriebenen Sekundärscheibensatz ein entsprechend ausgeführter und stufenlos variabler Primärscheibensatz zum Einsatz kommen oder es kann als Primär-Antrieb ein anderes System vorgesehen sein. Dies kann ein fest eingestellter, nicht veränderbarer Kegelscheibensatz, eine feste Führungseinrichtung für einen Riemen oder ein anders ausgebildetes, variables System beispielsweise mit einer Fliehkraftkupplung sein.

Des Weiteren besteht die Möglichkeit, dass der Sekundärscheibensatz wie oben bzw. nachfolgend beschrieben als Abtrieb einer Kraftübertragung verwendet wird. Dieses kann eine stationäre wie auch eine transportable Anwendung sein, zum Beispiel bei Haushaltsgeräten, bei Pumpen, bei von Hand geführten Werkzeugmaschinen aber auch bei größeren Werkzeugmaschinen.

Im Folgenden wird die Erfindung anhand von Zeichnungen beispielhaft näher beschrieben. Es zeigen:
- Fig. 1: Ein erfindungsgemäßer Riemenantrieb in einem Fahrrad oder einem E-Bike
- Fig. 2: Ein erfindungsgemäßer Riemenantrieb in einem Fahrrad oder einem E-Bike
- Fig. 3: Eine erfindungsgemäße Sekundärantriebseinheit
- Fig. 4: Ein Steiglager der sekundärseitigen Antriebseinheit
- Fig. 5: Eine erfindungsgemäße Sekundärantriebseinheit an einer Nabe
- Fig. 6: Eine Seitenansicht einer sekundärseitigen Antriebseinheit

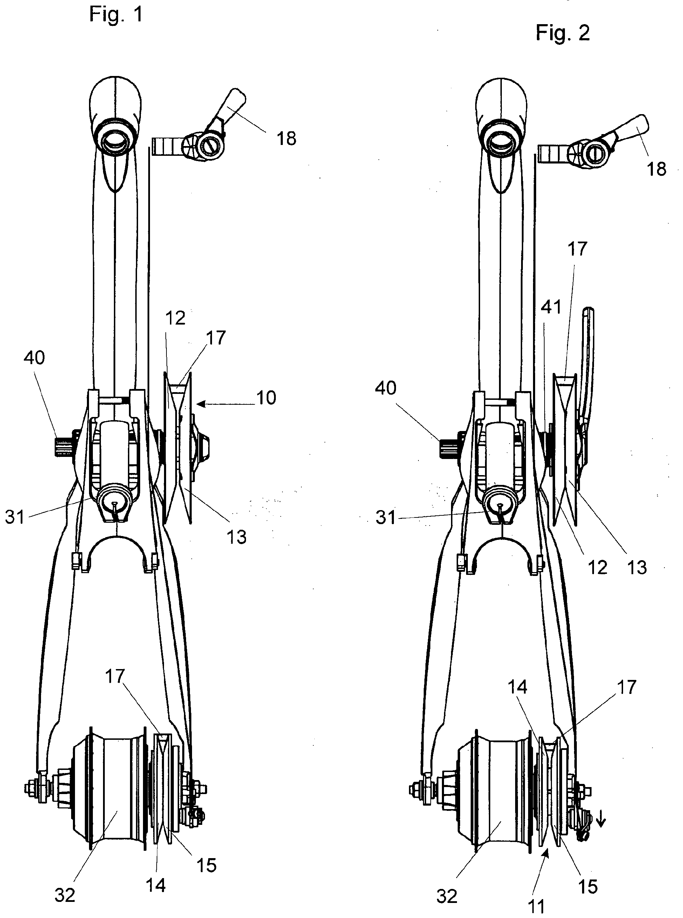

In der beispielhaft gezeigten Verwendung gemäß der Fig. 1 und Fig. 2 ist der stufenlos schaltbare Riemenantrieb 1 oder die Antriebseinheit an einem Fahrrad oder E-Bike verbaut. Im mittleren Bereich des Rahmens, im Wesentlichen unter der Sattelstütze 31 ist dabei ein Primärscheibensatz 10, mit zwei Kegelscheiben 12, 13, an einem Tretlager oder einem Tretantrieb mit Elektrounterstützung angeordnet. Im hinteren Bereich des Rahmens, an dessen Auslauf, ist ein Sekundärscheibensatz 11 an der Nabe 32 des Hinterrades angeordnet und wenigstens der, der Nabe zugewandten Kegelscheibe 14 mitnehmend und/oder über einen Freilauf verbunden. Zwischen dem Primärscheibensatz und dem Sekundärscheibensatz läuft ein Antriebsriemen 17, jeweils zwischen den Primärkegelscheiben 12, 13 und den Sekundärkegelscheiben 14, 15 in einer kraft- oder reibschlüssigen Verbindung zur Kraftübertragung.

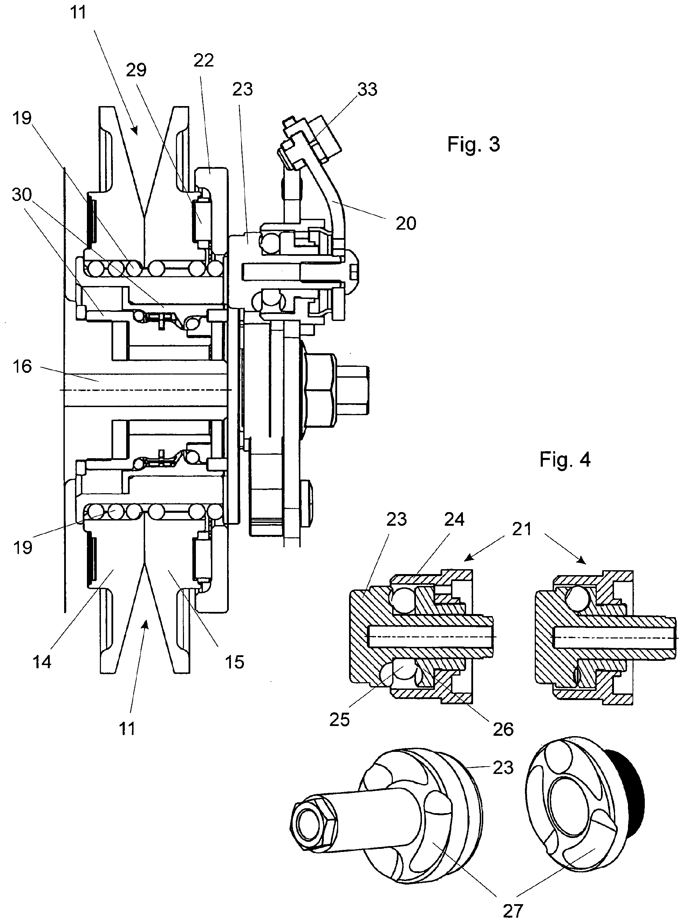

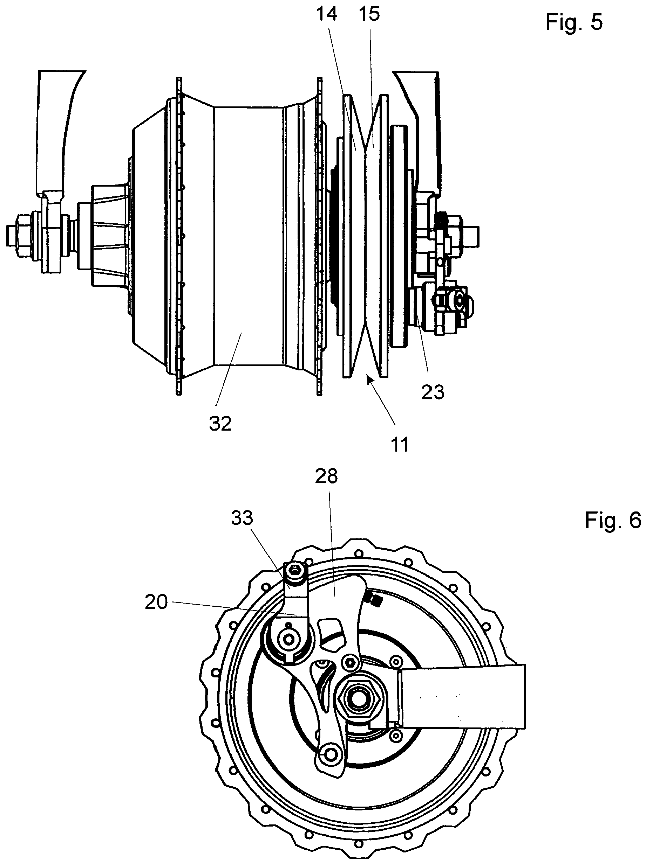

Wenigstens die Kegelscheiben 14, 15 des Sekundärscheibensatzes 11 sind dabei in ihrem Abstand zueinander veränderbar ausgeführt, wodurch der Riemen 17 entweder, bei mehr nebeneinanderliegenden Kegelscheiben, wie in Fig. 1 gezeigt, weiter von der Hinterradmittelachse entfernt, verläuft oder, bei mehr auseinanderliegenden Kegelscheiben, wie in der Fig. 2 gezeigt, näher an der Hinterradmittelachse verläuft, womit die Übersetzung des Antriebs entsprechend einfach und stufenlos variiert werden kann. Die Bedienung oder anders gesagt, der Schaltvorgang oder die Variation der Übersetzung erfolgt in der gezeigten Ausführung mittels eines Schalthebels 18, welcher beispielhaft über einen Steuerzug, ein Gestänge oder eine Hydraulik eine Mechanik ansteuert, welche den Abstand der Kegelscheiben 14, 15 zueinander variiert. Der Schalthebel selber oder die verbindende Mechanik zur Bedienung der Stelleinheit 20 ist dabei bevorzugt mit einer Rasterung, einer Klemmung oder anderen Fixierung ausgerüstet um den Bedienungskomfort zu erhöhen. Hierbei ist in einer bevorzugten Ausführung, wie in Fig. 3 und Fig. 5 gut zu erkennen ist, ein Sekundärscheibensatz 11 mit der der Nabe zugewandten ersten Kegelscheibe 14 und der zweiten Kegelscheibe 15 auf der Achse im Hinterrad angeordnet. Wenigstens die zweite, von der Nabe weiter entfernte, Kegelscheibe 15 ist auf der Welle 16 verschiebbar und bevorzugt sind beide Kegelscheiben auf der Welle kugelgelagert 19 und mit einem Freilauf 30 ausgeführt womit die Kraftübertragung des hier gezeigten Scheibensatzes 11 und der Nabe erfolgt. Die Kegelscheiben 14, 15 werden bei Krafteinwirkung durch den Riemen auseinandergetrieben und die äußere Kegelscheibe wird beispielsweise durch einen Gegenhalter oder Anschlag begrenzt und ist mit einer Mittlauf- Stellscheibe 22 ausgerüstet welche zur äußeren Kegelscheibe 15 mit einem Axial- Nadellager 29 ausgerüstet ist. Zusätzlich können in einer weiteren Ausführungsvariante Federelemente zwischen den Kegelscheiben angeordnet werden.

An einem Befestigungs- bzw. Haltesattel 28 ist parallel zur äußeren Kegelscheibe 15 sowie der Mitlauf- Stellscheibe 22 ein Steiglager 21 angeordnet, welches, wie in Fig. 4 zu sehen, mit einer als Druckbolzen 23 ausgebildeten Lagerschale ausgerüstet ist. Der Druckbolzen 23 ist derart angeordnet, dass dieser bei Betätigung im Steiglager senkrecht gegen die Mittlauf- Stellscheibe 22 drückt und damit die äußere Kegelscheibe 15 in Richtung der inneren Kegelscheibe 14 schiebt und den Abstand zwischen diesen reduziert. Hierbei wird der zwischen den beiden Kegelscheiben laufende Riemen 17 in eine, von der Mittelachse 16 weiter beabstandete Umlaufbahn gezwungen. Der Druckbolzen 23 im Steiglager 21 wird mittels einer Stelleinheit 20, welche die Lagerschale 23 in dem Gehäuse 24 des Steiglagers bei Betätigung dreht, mittels gegen eine Lagerschale 26 drückende, Teil- Schneckenförmige Steigerhebungen 27 nach außen und gegen die Mittlauf- Stellscheibe 22 gedrückt, womit der Abstand der Kegelscheiben zueinander verringert wird. Bevorzugt erfolgt diese Drehung der Lagerschale durch einen Hebel und/oder Stelleinheit 20, welche beispielsweise über einen Bowdenzug an einer Aufnahme 33 für diesen angelenkt wird.

In einer anderen Ausführung ist eine Hydraulik zur Anlenkung der Stelleinheit und durch herausdrücken des Druckbolzens gegen die äußere Kegelscheibe, ebenso erfindungsgemäß, vorgesehen. Bevorzugt wird ein Steiglager verwendet, bei dem zumindest drei Kugeln 25 oder mehr jeweils entlang einer Steigbahn sich bewegen. Mehr Kugeln sind ebenfalls einsetzbar. Die Verwendung der Kugeln erlaubt zum Beispiel, dass das Steiglager eine Rotationsbewegung leichter ausführen kann, insbesondere auch eine kreisförmige Rotationsbewegung. Weiterhin ist es bevorzugt, nicht nur ein, sondern mehrere Steiglager zu verwenden. Beispielsweise sind die Steiglager entlang einer Stirnseite des Gehäuses auf einem Umfangskreis angeordnet. Bevorzugt sind zumindest drei, besonders bevorzugt mindestens vier Steiglager vorgesehen.

## Patentansprüche

1. Stufenlos schaltbarer Riemenantrieb (1) oder Antriebseinheit mit einem Primärscheibensatz (10) und einem Sekundärscheibensatz (11) mit jeweils einer ersten und einer zweiten Kegelscheibe (12, 13; 14, 15), wobei der Primärscheibensatz (10) mit dem Sekundärscheibensatz (11) mittels eines Antriebsriemen (17) form- oder kraftschlüssig verbunden ist, der Primärscheibensatz (10) sich um eine erste Achse (16) dreht und der Sekundärscheibensatz (11) sich um eine zweite Achse dreht, wobei die erste und die zweite Achse voneinander entfernt angeordnet sind,
**dadurch gekennzeichnet,**
**dass** der Riemenantrieb (1) eine stufenlose Kraftübertragung zwischen dem Primärscheibensatz (10) und dem Sekundärscheibensatz (11) vorsieht und wenigstens der Sekundärscheibensatz (11) ein System zur stufenlosen Verstellung eines Abstands zwischen der ersten und der zweiten Kegelscheibe (14, 15) des Sekundärscheibensatzes (11) aufweist, wobei der Abstand der äußeren Kegelscheibe (15) zur inneren Kegelscheibe (14), welche auf einer gemeinsamen Achse (16) laufen mittels eines, die äußere Kegelscheibe (15) oder eines an dieser anliegenden oder angelenktem Element (22) bedienbaren Druck- oder Zugbolzen (23), welcher mittels einer Stelleinheit (20) bedienbar ist, variierbar ausgeführt ist.

2. Stufenlos schaltbarer Riemenantrieb nach Anspruch 1,
**dadurch gekennzeichnet,**
**dass** der Druckbolzen (23) in oder an einem Gehäuse (24) angeordnet ist und mittels eines drehbar gelagerten Steig- Stelllagers (21), welches mittels der Stelleinheit (20) bedienbar ist, gegen die äußere Kegelscheibe (15) oder einer an dieser anliegenden oder mitlaufenden Stellscheibe (22) drückbar oder wieder von dieser wegbewegbar ist, womit der Abstand der äußeren Kegelscheibe (15) zur inneren Kegelscheibe veränderbar ist.

3. Stufenlos schaltbarer Riemenantrieb nach Anspruch 1 und 2,
**dadurch gekennzeichnet,**
**dass** das Gehäuse (24) mit Druckbolzen (23) und Steiglager an einem Bügelelement (28) angeordnet ist womit die Position des Druckbolzens (23) zur äußeren Kegelscheibe (15) definierbar ist.

4. Stufenlos schaltbarer Riemenantrieb nach Anspruch 1,
**dadurch gekennzeichnet,**
**dass** zwischen der äußeren Kegelscheibe (15) und dem an dieser anliegenden oder angelenktem Element (22) ein Axial- Lager (29) angeordnet ist.

5. Stufenlos schaltbarer Riemenantrieb nach Anspruch 1,
**dadurch gekennzeichnet,**
**dass** die Stelleinheit (20) für die Anlenkung des Druckbolzens mittels eines, an einer geeigneten Spannaufnahme, angebrachten Bowdenzuges fernbedienbar ist.

6. Stufenlos schaltbarer Riemenantrieb nach Anspruch 1,
**dadurch gekennzeichnet,**
**dass** die Stelleinheit (20) für die Anlenkung des Druckbolzens mittels einer Hydraulikvorrichtung fernbedienbar ist.

7. Stufenlos schaltbarer Riemenantrieb nach Anspruch 1,
**dadurch gekennzeichnet,**
**dass** die Kegelscheiben (12, 13) des Primärscheibensatzes (10) auf einer gemeinsamen Achse (40) gelagert sind wobei wenigstens eine der Kegelscheiben mit einem Federelement (41) derart ausgerüstet ist, dass sich diese Kegelscheibe bei Krafteinwirkung durch den Riemen von der anderen Kegelscheibe entfernen kann.
